(19) 

Europäisches
Patentamt
European
Patent Office
Office européen
des brevets

(11) **EP 2 330 662 A1**

(12) **EUROPEAN PATENT APPLICATION**
published in accordance with Art. 153(4) EPC

(43) Date of publication:
**08.06.2011 Bulletin 2011/23**

(21) Application number: **09812824.2**

(22) Date of filing: **14.07.2009**

(51) Int Cl.:
*H01M 4/02* (2006.01)     *H01M 2/16* (2006.01)
*H01M 4/04* (2006.01)     *H01M 4/62* (2006.01)
*H01M 4/66* (2006.01)

(86) International application number:
**PCT/JP2009/003309**

(87) International publication number:
**WO 2010/029675 (18.03.2010 Gazette 2010/11)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **09.09.2008 JP 2008231336**

(71) Applicant: **Panasonic Corporation
Kadoma-shi
Osaka 571-8501 (JP)**

(72) Inventors:
• **MURAOKA, Yoshiyuki
Chuo-ku, Osaka-shi
Osaka 540-6207 (JP)**
• **HIRAKAWA, Yasushi
Chuo-ku, Osaka-shi
Osaka 540-6207 (JP)**
• **TANAKA, Miho
Chuo-ku, Osaka-shi
Osaka 540-6207 (JP)**

(74) Representative: **Grünecker, Kinkeldey,
Stockmair & Schwanhäusser
Anwaltssozietät
Leopoldstrasse 4
80802 München (DE)**

(54) **NONAQUEOUS ELECTROLYTE SECONDARY BATTERY AND METHOD FOR MANUFACTURING THE SAME**

(57)     A nonaqueous electrolyte secondary battery includes: a positive electrode 4 including a positive electrode current collector and a positive electrode material mixture layer containing a positive electrode active material and a binder and provided on the positive electrode current collector; a negative electrode 5; a porous insulating layer 6 interposed between the positive electrode 4 and the negative electrode 5; and a nonaqueous electrolyte. The positive electrode 4 has a tensile extension percentage of 3.0% or more. The binder is made of polyvinylidene fluoride. The positive electrode current collector has a softening temperature lower than a crystalline melting point of the binder.

FIG. 2

**Description**

TECHNICAL FIELD

The present disclosure relates to nonaqueous electrolyte secondary batteries and methods for fabricating the batteries, and particularly relates to a nonaqueous electrolyte secondary battery capable of reducing occurrence of short-circuit caused by crush and a method for fabricating such a battery.

BACKGROUND ART

To meet recent demands for use on vehicles in consideration of environmental issues or for employing DC power supplies for large tools, small and lightweight secondary batteries capable of performing rapid charge and large-current discharge have been required. Examples of typical secondary batteries satisfying such demands include a nonaqueous electrolyte secondary battery employing, as a negative electrode material, an active material such as lithium metal or a lithium alloy or a lithium intercalation compound in which lithium ions are intercalated in carbon serving as a host substance (which is herein a substance capable of intercalating or deintercalating lithium ions), and also employing, as an electrolyte, an aprotic organic solvent in which lithium salt such as $LiClO_4$ or $LiPF_6$ is dissolved.

This nonaqueous electrolyte secondary battery generally includes: a negative electrode in which the negative electrode material described above is supported on a negative electrode current collector; a positive electrode in which a positive electrode active material, e.g., lithium cobalt composite oxide, electrochemically reacting with lithium ions reversibly is supported on a positive electrode current collector; and a porous insulating layer carrying an electrolyte thereon and interposed between the negative electrode and the positive electrode to prevent short-circuit from occurring between the negative electrode and the positive electrode.

The positive and negative electrodes formed in the form of sheet or foil are stacked, or wound in a spiral, with the porous insulating layer interposed therebetween to form a power generating element. This power generating element is placed in a battery case made of metal such as stainless steel, iron plated with nickel, or aluminium. Thereafter, the electrolyte is poured in the battery case, and then a lid is fixed to the opening end of the battery case to seal the battery case. In this manner, a nonaqueous electrolyte secondary battery is fabricated.

CITATION LIST

PATENT DOCUMENT

Patent Document 1: Japanese Patent Publication No. H05-182692

SUMMARY OF THE INVENTION

TECHNICAL PROBLEM

In general, occurrence of short-circuit in a nonaqueous electrolyte secondary battery (which may be hereinafter simply referred to as a "battery") causes large current to flow in the battery, resulting in a temperature rise in the battery. A rapid temperature rise in the battery might cause excessive heating in the battery. To prevent this, improvement in the safety of the nonaqueous electrolyte secondary battery is required. In particular, for large-size and high-power nonaqueous electrolyte secondary batteries, excessive heating is highly likely to occur and, therefore, safety improvement is strongly required.

Short-circuit in the nonaqueous electrolyte secondary battery occurs for some reasons including destruction of the battery by, for example, crush and entering of a foreign material in the battery. Among them, short-circuit caused by crushing of the battery in a fully-charged state produces high energy in the shortest instant, resulting in that excessive heating is most likely to occur. In practice, battery destruction might occur in some applications, and thus, the presence of short-circuit caused by battery crush is an important factor for safety evaluation.

In view of this, inventors of this disclosure intensively studied what causes short-circuit in a nonaqueous electrolyte secondary battery when the battery is destroyed by crush, to obtain the following finding.

In a situation where a nonaqueous electrolyte secondary battery is crushed to be deformed, each of a positive electrode, a negative electrode, and a porous insulating layer forming an electrode group is subjected to tensile stress, and extends according to the deformation of a battery case. When the battery is crushed to a predetermined depth, the positive electrode having the lowest tensile extension percentage among the positive and negative electrodes and the porous insulating layer is broken first. Then, the broken portion of the positive electrode penetrates the porous insulating layer, resulting in that the positive electrode and the negative electrode are short-circuited. In other words, short-circuit occurs in the nonaqueous electrolyte secondary battery.

Based on the foregoing finding, the inventors concluded that it is necessary for reduction of short-circuit caused by crush of the battery to reduce first breakage of the positive electrode and that an increase in tensile extension percentage of the positive electrode is an important factor for the reduction of the first breakage.

In view of this, the inventors further intensively studied for means for increasing the tensile extension percentage of the positive electrode, to find that heat treatment performed on the positive electrode at a predetermined temperature for a predetermined period after rolling can increase the tensile extension percentage of the positive electrode.

For the heat treatment, disclosed is a technique of, for example, performing heat treatment on a positive electrode or a negative electrode at a temperature higher than the recrystallizing temperature of a binder and lower than the decomposition temperature of the binder before the positive and negative electrodes are stacked or wound with a porous insulating layer interposed therebetween, for the purpose of reducing peeling of an electrode material from a current collector during the stacking or winding of the electrodes or reducing a decrease in adhesiveness of the electrode material to the current collector (see, Patent Document 1, for example).

In this technique, in the case of a nonaqueous electrolyte secondary battery employing a current collector made of, for example, aluminium having high purity as a positive electrode current collector and employing a binder made of polyvinylidine difluoride (PVDF) (hereinafter referred to as a reference battery), the positive electrode is subjected to heat treatment at a high temperature for a long period after rolling. Then, although the tensile extension percentage of the positive electrode can be increased, a new problem, i.e., a decrease in the capacity of the nonaqueous electrolyte secondary battery, arises.

It is, therefore, an object of the present disclosure to reduce occurrence of short-circuit in the battery even upon destruction of a nonaqueous electrolyte secondary battery by crush by increasing the tensile extension percentage of a positive electrode, while reducing a decrease in the capacity of the battery.

SOLUTION TO THE PROBLEM

To achieve the object, a nonaqueous electrolyte secondary battery in an aspect of the present disclosure includes: a positive electrode including a positive electrode current collector and a positive electrode material mixture layer containing a positive electrode active material and a binder and provided on the positive electrode current collector; a negative electrode; a porous insulating layer interposed between the positive electrode and the negative electrode; and a nonaqueous electrolyte, wherein the positive electrode has a tensile extension percentage of 3.0% or more, the binder is made of polyvinylidene fluoride, and the positive electrode current collector has a softening temperature lower than a crystalline melting point of the binder. The positive electrode current collector is preferably made of aluminium containing iron.

In the nonaqueous electrolyte secondary battery, the tensile extension percentage of the positive electrode is increased to 3% or more. Accordingly, even when the battery is destroyed by crush, the positive electrode is not broken first, thus reducing occurrence of short-circuit in the battery. As a result, the safety of the battery can be enhanced.

By employing a current collector made of iron-containing aluminium and containing 1.40 weight percent (wt. %) of iron as the positive electrode current collector and employing a binder made of polyvinylidine difluoride (PVDF), the softening temperature of the positive electrode current collector can be reduced below the crystalline melting point of the binder. In addition, by performing heat treatment at a temperature higher than or equal to the softening temperature of the positive electrode current collector and lower than the crystalline melting point of the binder (or heat treatment at a temperature higher than or equal to the crystalline melting point of the binder and lower than the decomposition temperature of the binder for a relatively short period), the tensile extension percentage of the positive electrode can be increased to 3% or more. Accordingly, it is possible to prevent (or reduce) covering of the positive electrode active material with the melted binder during the heat treatment, thereby ensuring reduction of (or minimizing) a decrease in the battery capacity to provide a battery with excellent discharge performance.

In the nonaqueous electrolyte secondary battery, an amount of iron contained in the positive electrode current collector is 1.40 weight percent (wt. %) or more.

With this structure, the softening temperature of the positive electrode current collector can be lower than the crystalline melting point of the binder.

In the nonaqueous electrolyte secondary battery, the tensile extension percentage of the positive electrode is preferably calculated from a length of a sample positive electrode formed by using the positive electrode and having a width of 15 mm and a length of 20 mm immediately before the sample positive electrode is broken with one end of the sample positive electrode fixed and the other end of the sample positive electrode extended along a longitudinal direction thereof at a speed of 20 mm/min, and from a length of the sample positive electrode before the sample positive electrode is extended.

In the nonaqueous electrolyte secondary battery, the positive electrode current collector preferably has a dynamic hardness of 70 or less.

Then, even with entering of a foreign material in the electrode group, the positive electrode can be deformed according to the shape of the foreign material to reduce penetration of the foreign material into the separator, thereby reducing occurrence of short-circuit in the battery. As a result, the safety of the battery can be further enhanced.

Preferably, in the nonaqueous electrolyte secondary battery, measurement of stress on a sample positive electrode whose circumferential surface is being pressed at 10 mm/min shows that no inflection point of stress arises until a gap corresponding to the sample positive electrode crushed by the pressing reaches 3 mm, inclusive, and the sample positive electrode is formed by using the positive electrode, has a circumference of 100 mm, and is rolled up in the shape of a single complete circle.

With this structure, even when the positive electrode is made thick, breakage of the positive electrode in forming the electrode group can be reduced, thereby providing the battery with high productivity. In other words, the positive electrode can be made thick to increase the battery capacity without breakage of the positive electrode in forming the electrode group.

Preferably, in the nonaqueous electrolyte secondary battery, the negative electrode has a tensile extension percentage of 3.0% or more, and the porous insulating layer has a tensile extension percentage of 3.0% or more.

To achieve the object described above, a method for fabricating a nonaqueous electrolyte secondary battery in a first aspect of the present disclosure is a method for fabricating a nonaqueous electrolyte secondary battery including a positive electrode including a positive electrode current collector and a positive electrode material mixture layer containing a positive electrode active material and a binder and provided on the positive electrode current collector, a negative electrode, a porous insulating layer interposed between the positive electrode and the negative electrode, and a nonaqueous electrolyte. The method includes the steps of: (a) preparing the positive electrode; (b) preparing the negative electrode; and (c) either winding or stacking the positive electrode and the negative electrode with the porous insulating layer interposed therebetween after steps (a) and (b), wherein step (a) includes the steps of (a1) coating the positive electrode current collector with positive electrode material mixture slurry containing the positive electrode active material and the binder, and drying the slurry, (a2) rolling the positive electrode current collector coated with the dried positive electrode material mixture slurry, thereby forming the positive electrode having a predetermined thickness, and (a3) performing heat treatment on the positive electrode coated with the dried positive electrode material mixture slurry at a predetermined temperature after step (a2), the binder is made of polyvinylidene fluoride, and the predetermined temperature is higher than or equal to a softening temperature of the positive electrode current collector and lower than a crystalline melting point of the binder. The positive electrode current collector is preferably made of aluminium containing iron. The amount of iron contained in the positive electrode current collector is preferably 1.40 weight percent (wt. %) or more.

In the method of the first aspect, heat treatment is performed on the positive electrode at a temperature higher than or equal to the softening temperature of the positive electrode current collector after the rolling, thereby increasing the tensile extension percentage of the positive electrode to 3% or more. Accordingly, even when the battery is destroyed by crush, the positive electrode is not broken first, and thus, occurrence of short-circuit in the battery can be reduced. As a result, the safety of the battery can be enhanced.

In addition, the current collector made of iron-containing aluminium and containing 1.40 wt. % or more of iron is employed as a positive electrode current collector and the binder made of PVDF is employed, thereby reducing the softening temperature of the positive electrode current collector below the crystalline melting point of the binder. Further, heat treatment is performed at a temperature higher than or equal to the softening temperature of the positive electrode current collector and lower than the crystalline melting point of the binder, thereby increasing the tensile extension percentage of the positive electrode to 3% or more. Accordingly, the binder is not melt, and thus, it is possible to prevent the positive electrode active material from being covered with the melted binder during the heat treatment, thereby ensuring reduction of a decrease in the battery capacity to provide a battery exhibiting excellent discharge performance.

Moreover, the dynamic hardness of the positive electrode current collector is set at 70 or less, thereby reducing short-circuit caused by entering of a foreign material. The electrode group is formed by using the positive electrode for which the gap at which an inflection point of stress is observed in a stiffness test is 3 mm or less, thereby reducing breakage of the positive electrode in forming the electrode group.

To achieve the object described above, a method for fabricating a nonaqueous electrolyte secondary battery in a second aspect of the present disclosure is a method for fabricating a nonaqueous electrolyte secondary battery including a positive electrode including a positive electrode current collector and a positive electrode material mixture layer containing a positive electrode active material and a binder and provided on the positive electrode current collector, a negative electrode, a porous insulating layer interposed between the positive electrode and the negative electrode, and a nonaqueous electrolyte. The method includes the steps of: (a) preparing the positive electrode; (b) preparing the negative electrode; and (c) either winding or stacking the positive electrode and the negative electrode with the porous insulating layer interposed therebetween after steps (a) and (b), wherein step (a) includes the steps of (a1) coating the positive electrode current collector with positive electrode material mixture slurry containing the positive electrode active material and the binder, and drying the slurry, (a2) rolling the positive electrode current collector coated with the dried positive electrode material mixture slurry, thereby forming the positive electrode having a predetermined thickness, and (a3) performing heat treatment on the positive electrode coated with the dried positive electrode material mixture slurry at a predetermined temperature after step (a2), the binder is made of polyvinylidene fluoride, and the predetermined temperature is higher than or equal to a crystalline melting point of the binder and lower than a decomposition temperature of the binder. The positive electrode current collector is preferably made of aluminium containing iron. The amount of iron contained in the positive electrode current collector is preferably 1.40 wt. % or more.

In the method of the second aspect, heat treatment is performed on the positive electrode at a temperature higher than or equal to the crystalline melting point of the binder (where the crystalline melting point of the binder > the softening temperature of the positive electrode current collector) after the rolling, thereby increasing the tensile extension percentage of the positive electrode to 3% or more. Accordingly, even when the battery is destroyed by crush, the positive electrode is not broken first, and thus, occurrence of short-circuit in the battery can be reduced. As a result, the safety of the battery can be enhanced.

In addition, the current collector made of iron-containing aluminium and containing 1.40 wt. % or more of iron is employed as a positive electrode current collector and the binder made of PVDF is employed, thereby reducing the softening temperature of the positive electrode current collector below the crystalline melting point of the binder. Further, heat treatment is performed at a temperature higher than or equal to the crystalline melting point of the binder and lower than the decomposition temperature of the binder for a relatively short period, thereby increasing the tensile extension percentage of the positive electrode to 3% or more. Accordingly, the short period of the heat treatment can reduce the amount of the binder melted during the heat treatment, thereby reducing covering of the positive electrode active material with the melted binder, and minimizing a decrease in the battery capacity to provide a battery exhibiting excellent discharge performance.

Moreover, the dynamic hardness of the positive electrode current collector is set at 70 or less and the dynamic hardness of the positive electrode material mixture layer is set at 5 or less, thereby reducing short-circuit caused by entering of a foreign material. Further, the electrode group is formed by using the positive electrode for which the gap at which an inflection point of stress is observed in a stiffness test is 3 mm or less, thereby reducing breakage of the positive electrode in forming the electrode group.

In the method of the first or second aspect, in step (a3), the heat treatment is preferably performed on the positive electrode by bringing the positive electrode and a heated roll into contact with each other.

ADVANTAGES OF THE INVENTION

In a nonaqueous electrolyte secondary battery and a method for fabricating the nonaqueous electrolyte secondary battery according to the present disclosure, a current collector made of iron-containing aluminium and containing 1.40 wt. % or more of iron is employed as a positive electrode current collector, and a binder made of PVDF is employed. Accordingly, a decrease in the capacity of the nonaqueous electrolyte secondary battery can be reduced, and the tensile extension percentage of the positive electrode can be increased to 3% or more.

BRIEF DESCRIPTION OF THE DRAWINGS

[FIG. 1] FIG. 1 is a view showing a softening temperature of a current collector made of aluminium containing iron, a softening temperature of a current collector made of aluminium, a crystalline melting point of a binder, and a decomposition temperature of the binder.
[FIG. 2] FIG. 2 is a vertical cross-sectional view illustrating a structure of a nonaqueous electrolyte secondary battery according to a first embodiment of the present disclosure.
[FIG. 3] FIG. 3 is an enlarged cross-sectional view illustrating a structure of an electrode group.
[FIG. 4] FIGS. 4(a) through 4(c) are views schematically showing measurement of a tensile extension percentage.
[FIG. 5] FIGS. 5(a) and 5(b) are views schematically showing a stiffness test.
[FIG. 6] FIGS. 6(a) and 6(b) are views showing a foreign material entering test.

DESCRIPTION OF EMBODIMENTS

Embodiments of the present disclosure will be described hereinafter with reference to the drawings. The present disclosure is not limited to the following embodiments.
First, inventors of this disclosure examined the aforementioned new problem (i.e., a decrease in the battery capacity) arising in a reference battery (specifically, a nonaqueous electrolyte secondary battery employing a current collector made of high-purity aluminum as a positive electrode current collector and PVDF as a binder), to find that the problem is caused by covering of a positive electrode active material with the binder melted in heat treatment performed at a high temperature for a long period after rolling. However, in the reference battery, when the heat treatment was performed at a lower temperature and/or for a shorter period, the decrease in the battery capacity could be reduced, but the tensile extension percentage of the positive electrode could not be increased.

To solve this problem, the inventors further intensively studied for the structure of a positive electrode capable of increasing its tensile extension percentage even with heat treatment performed at a lower temperature and/or for a shorter period after rolling, to find that the use of a current collector made of iron-containing aluminium as a positive electrode current collector can sufficiently increase the tensile extension percentage of the positive electrode even with the heat treatment performed at a lower temperature and/or for a shorter period.

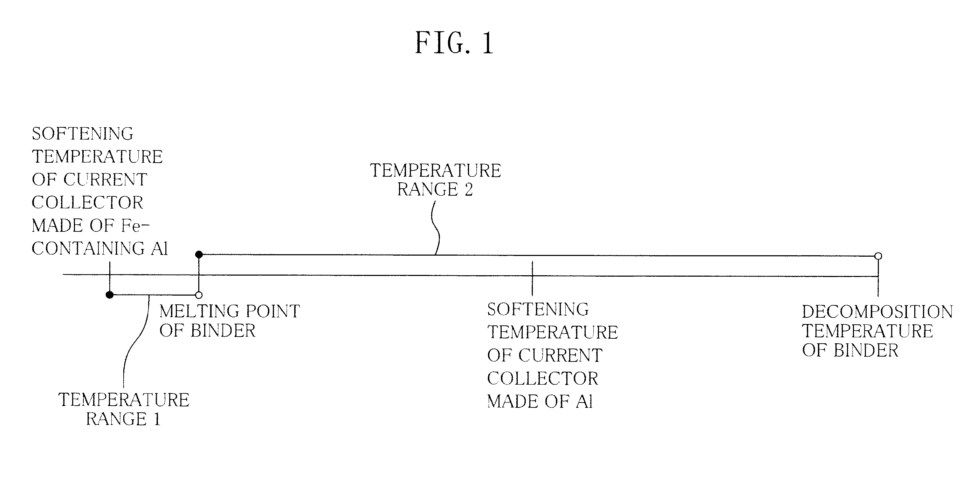

In addition, the inventors found that an increase in the amount of iron contained in the positive electrode current collector can reduce the softening temperature of the positive electrode current collector below the crystalline melting point of the binder and further reduce the temperature and/or period of heat treatment, as shown in FIG. 1.

The increase in the tensile extension percentage of the positive electrode is considered to be achieved because heat treatment performed on the positive electrode at a temperature higher than or equal to the softening temperature of the positive electrode current collector causes crystal forming the positive electrode current collector to grow and become coarse.

The reductions in the temperature and/or period of the heat treatment are considered to be achieved because (1) inclusion of iron in the positive electrode current collector reduces the softening temperature of the positive electrode current collector and (2) inclusion of iron in the positive electrode current collector accelerates the growth of crystal forming the positive electrode current collector.

As described above, the intensive study of the inventors to achieve the above-mentioned object have led to the finding in which the use of a current collector including 1.40 wt. % or more of iron as a positive electrode current collector and the use of a binder made of PVDF can achieve the object by:

(1) after rolling, performing heat treatment on the positive electrode at a temperature (i.e., at a relatively low temperature, see the temperature range 1 shown in FIG. 1) higher than or equal to the softening temperature of the positive electrode current collector and lower than the crystalline melting point of the binder (see, a first embodiment below); or

(2) after rolling, performing heat treatment on the positive electrode for a relatively short period at a temperature (i.e., a relatively high temperature, see the temperature range 2 shown in FIG. 1) higher than or equal to the crystalline melting point of the binder and lower than the decomposition temperature of the binder (see, a second embodiment below).

(FIRST EMBODIMENT)

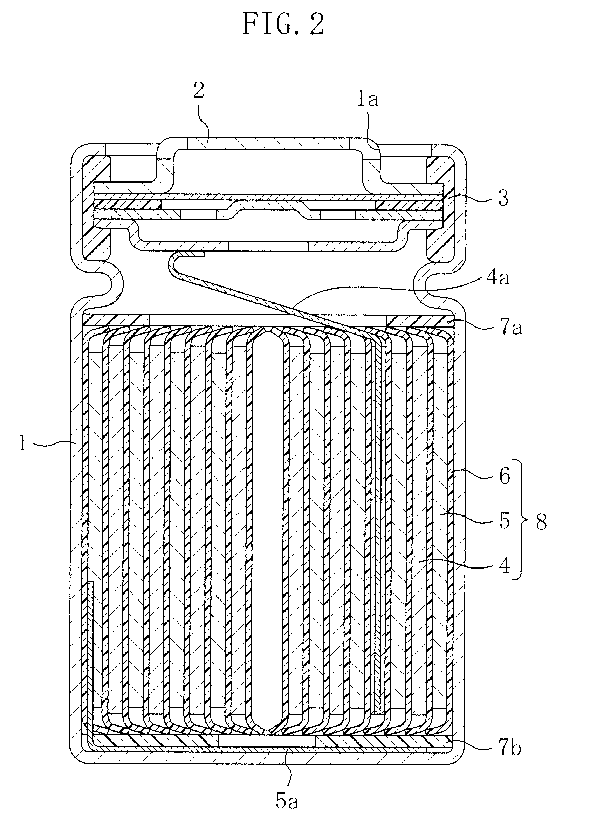

Hereinafter, a lithium ion secondary battery will be described as a specific example of a nonaqueous electrolyte secondary battery according to a first embodiment of the present disclosure. A structure of the battery is described with reference to FIG. 2. FIG. 2 is a vertical cross-sectional view illustrating a structure of the nonaqueous electrolyte secondary battery of the first embodiment.

As illustrated in FIG. 2, the nonaqueous electrolyte secondary battery of this embodiment includes a battery case 1 made of, for example, stainless steel and an electrode group 8 placed in the battery case 1.

An opening 1a is formed in the upper face of the battery case 1. A sealing plate 2 is crimped to the opening 1a with a gasket 3 interposed therebetween, thereby sealing the opening 1a.

The electrode group 8 includes a positive electrode 4, a negative electrode 5, and a porous insulating layer (separator) 6 made of, for example, polyethylene. The positive electrode 4 and the negative electrode 5 are wound in a spiral with the separator 6 interposed therebetween. An upper insulating plate 7a is placed on top of the electrode group 8. A lower insulating plate 7b is placed on the bottom of the electrode group 8.

One end of a positive electrode lead 4a made of aluminium is attached to the positive electrode 4. The other end of the positive electrode lead 4a is connected to the sealing plate 2 also serving as a positive electrode terminal. One end of a negative electrode lead 5a made of nickel is attached to the negative electrode 5. The other end of the negative electrode lead 5a is connected to the battery case 1 also serving as a negative electrode terminal.

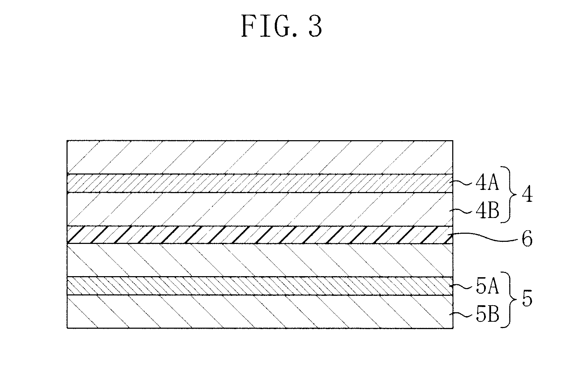

A structure of the electrode group 8 of the nonaqueous electrolyte secondary battery of the first embodiment will now be described with reference to FIG 3. FIG. 3 is an enlarged cross-sectional view illustrating the structure of the electrode group 8.

As illustrated in FIG. 3, the positive electrode 4 includes a positive electrode current collector 4A and a positive electrode material mixture layer 4B provided on the surface of the positive electrode current collector 4A. The positive electrode current collector 4A is made of aluminium containing iron, and preferably contains 1.40 wt. % or more of iron. The positive electrode material mixture layer 4B contains a positive electrode active material, a binder made of PVDF, and a conductive agent, for example. The softening temperature of the positive electrode current collector 4A is lower than the crystalline melting point of PVDF. The tensile extension percentage of the positive electrode 4 is 3% or more.

As illustrated in FIG. 3, the negative electrode 5 includes a negative electrode current collector 5A and a negative electrode material mixture layer 5B provided on the surface of the negative electrode current collector 5A. The negative electrode current collector 5A is a conductive member in the shape of a plate. The negative electrode material mixture layer 5B contains a negative electrode active material and a binder, for example. The tensile extension percentage of the negative electrode 5 is 3% or more.

As illustrated in FIG. 3, the separator 6 is interposed between the positive electrode 4 and the negative electrode 5. The tensile extension percentage of the separator 6 is 3% or more.

A method for fabricating a nonaqueous electrolyte secondary battery according to the first embodiment will be described hereinafter with reference to FIG. 2.

-Method for Forming Positive Electrode-

A positive electrode 4 is formed in the following manner. For example, first, a positive electrode active material, a binder made of PVDF, and a conductive agent are mixed in a liquid component, thereby preparing positive electrode material mixture slurry. Then, this positive electrode material mixture slurry is applied onto the surface of a positive electrode current collector made of iron-containing aluminium and containing 1.40 wt. % or more of iron, and is dried. Thereafter, the resultant positive electrode current collector is rolled, thereby forming a positive electrode having a predetermined thickness. Subsequently, the positive electrode is subjected to heat treatment at a relatively low temperature. The relatively low temperature herein is higher than or equal to the softening temperature of the positive electrode current collector 4A and lower than the crystalline melting point of the binder. The heat treatment on the positive electrode is carried out by the following method. For example, as a first method, the heat treatment on the positive electrode is carried out by bringing the positive electrode and a heated roll into contact with each other. Alternatively, as a second method, the heat treatment on the positive electrode is carried out by using hot air subjected to low humidity treatment.

Heat treatment performed to increase the tensile extension percentage of the positive electrode needs to be carried out after the rolling. If the heat treatment is carried out before the rolling, the tensile extension percentage of the positive electrode can be increased, but the tensile extension percentage of the positive electrode decreases in rolling performed after the heat treatment, resulting in that the tensile extension percentage of the positive electrode cannot be increased eventually.

To effectively increase the tensile extension percentage of the positive electrode, a positive electrode current collector having a relatively large thickness may be employed in forming the positive electrode. For example, in the case where a positive electrode current collector with a thickness of 15 $\mu$m is used in forming the positive electrode, the tensile extension percentage of the positive electrode can be easily increased to 3% or more, but it is relatively difficult to increase the tensile extension percentage of the positive electrode to 6% or more. On the other hand, in the case where a positive electrode current collector with a thickness of 30 $\mu$m is used in forming the positive electrode, the tensile extension percentage of the positive electrode can be increased to 13% or more.

- Method for Forming Negative Electrode-

A negative electrode 5 is formed in the following manner. For example, first, a negative electrode active material and a binder are mixed in a liquid component, thereby preparing negative electrode material mixture slurry. Then, this negative electrode material mixture slurry is applied onto the surface of a negative electrode current collector, and is dried. Thereafter, the resultant negative electrode current collector is rolled, thereby forming a negative electrode having a predetermined thickness. After the rolling, the negative electrode may be subjected to heat treatment at a predetermined temperature for a predetermined period.

<Method for Fabri cating Battery>

A battery is fabricated in the following manner. For example, as illustrated in FIG. 2, an aluminium positive electrode lead 4a is attached to a positive electrode current collector (see, 4A in FIG. 3), and a nickel negative electrode lead 5a is attached to a negative electrode current collector (see, 5A in FIG. 3). Then, a positive electrode 4 and a negative electrode 5 are wound with a separator 6 interposed therebetween, thereby forming an electrode group 8. Thereafter, an upper insulating plate 7a is placed on the upper end of the electrode group 8, and a lower insulating plate 7b is placed on the lower end of the electrode group 8. Subsequently, the negative electrode lead 5a is welded to a battery case 1, and the positive electrode lead 4a is welded to a sealing plate 2 including a safety valve configured to be operated with inner pressure, thereby housing the electrode group 8 in the battery case 1. Then, a nonaqueous electrolyte is poured in the battery case 1 under a reduced pressure. Lastly, an opening end of the battery case 1 is crimped to the sealing plate 2 with a gasket 3 interposed therebetween. In this manner, a battery is fabricated.

The positive electrode 4 of this embodiment employs a current collector made of iron-containing aluminium and containing 1.40 wt. % or more of iron as a positive electrode current collector 4A, and a binder made of PVDF, and is formed by performing, after rolling, heat treatment at a temperature higher than or equal to the softening temperature of the positive electrode current collector and lower than the crystalline melting point of the binder.

The positive electrode 4 of this embodiment has features (1), (2), and (3) as follows:

(1) The tensile extension percentage of the positive electrode 4 is 3% or more;
(2) The dynamic hardness of the positive electrode current collector 4A is 70 or less; and
(3) A gap at which an inflection point of stress is observed in a stiffness test is 3 mm or less.

Measurement methods (A)-(C) for the respective features (1)-(3) will now be described.

(A) Measurement of Tensile Extension Percentage

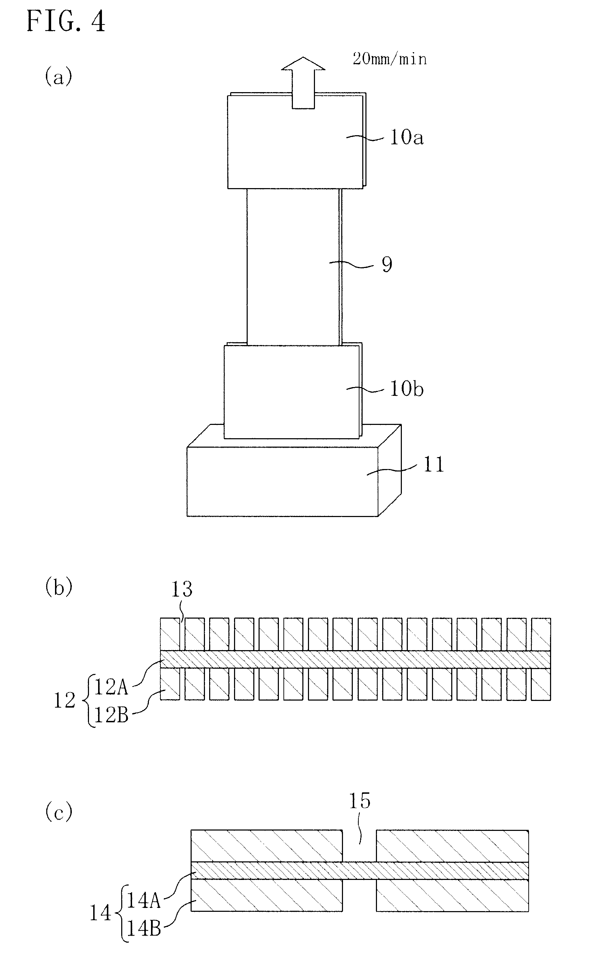

The "tensile extension percentage of a positive electrode" herein is measured as follows. First, a positive electrode is cut to have a width of 15 mm and an effective length (i.e., the length of an effective portion) of 20 mm, thereby forming a sample positive electrode 9 as illustrated in FIG. 4(a). Then, one end of the sample positive electrode 9 is placed on a lower chuck 10b supported by a base 11, whereas the other end of the sample positive electrode 9 is placed at an upper chuck 10a connected to a load mechanism (not shown) via a load cell (i.e., a load converter, not shown, for converting a load into an electrical signal), thereby holding the sample positive electrode 9. Subsequently, the upper chuck 10a is moved along the length of the sample positive electrode 9 at a speed of 20 mm/min to extend the sample positive electrode 9 (see, the arrow shown in FIG. 4(a)). At this time, the length of the sample positive electrode immediately before the sample positive electrode is broken is measured. Using the obtained length and the length (i.e., 20 mm) before the extension of the sample positive electrode 9, the tensile extension percentage of the positive electrode is calculated. The tensile load on the sample positive electrode 9 is detected from information obtained from the load cell.

The definition of the "tensile extension percentage of the positive electrode" will now be explained with reference to FIGS. 4(b) and 4(c). FIGS. 4(b) and 4(c) are cross-sectional views schematically illustrating the positive electrode in the measurement of the tensile extension percentage. Specifically, FIG. 4(b) shows the positive electrode of this disclosure (i.e., a positive electrode subjected to heat treatment after rolling and having a tensile extension percentage of 3% or more), and FIG. 4(c) shows a conventional positive electrode (i.e., a positive electrode having a tensile extension percentage less than 3%).

In measuring a positive electrode 12 according to this disclosure, a positive electrode current collector 12A extends first with fine cracks 13 occurring in an positive electrode material mixture layer 12B as illustrated in FIG. 4(b) before the positive electrode current collector 12A is finally broken. In this manner, in the positive electrode 12 of this disclosure, a first crack occurs in the positive electrode material mixture layer 12B and, for a short period after occurrence of the first crack, the positive electrode current collector 12A is not broken, and continues to extend with cracks occurring in the positive electrode material mixture layer 12B.

On the other hand, in measuring the tensile extension percentage of a conventional positive electrode 14, not a fine crack (see, 13 in FIG. 4(b)) but a large crack 15 as shown in FIG. 4(c) occurs in a positive electrode material mixture layer 14B, resulting in that a positive electrode current collector 14A is broken simultaneously with occurrence of the crack 15 in the positive electrode material mixture layer 14B.

(B) Measurement of Dynamic Hardness

The "dynamic hardness" herein is measured in the following manner. An indenter is pressed into the positive electrode under a predetermined test pressure P (mN) so that the indent depth (the depth of penetration) D ($\mu$m) at this time can be measured. The obtained indent depth D is introduced to [Equation 1] below, thereby calculating a dynamic hardness DH. As the indenter, a Berkovich indenter (i.e., a three-sided pyramid indenter with a ridge angle of 115°) was used in this case.

$$DH = 3.8584 \times P/D^2 \qquad \text{[Equation 1]}$$

(C) Measurement of Gap in Stiffness Test

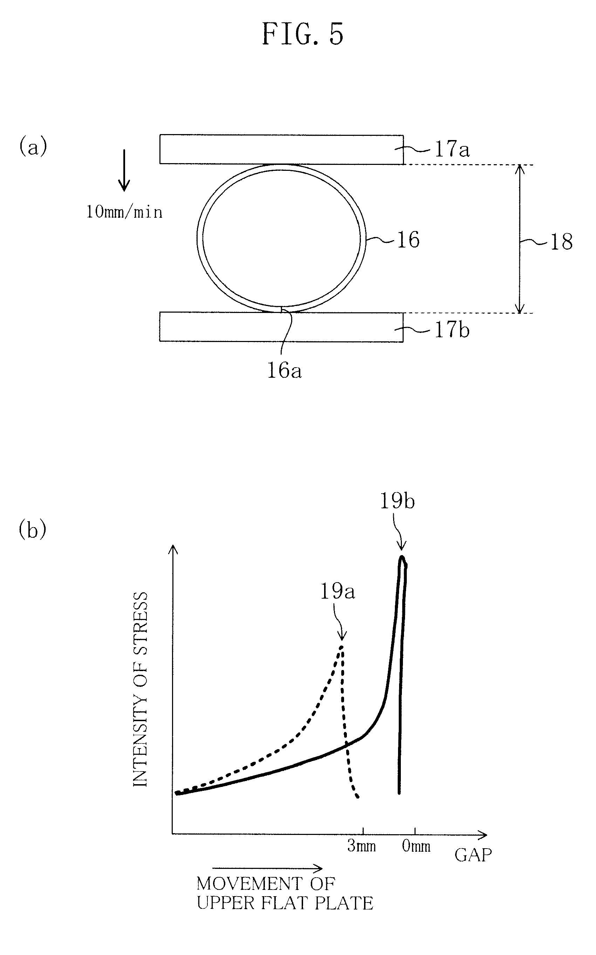

The "stiffness test" herein is a test in which the circumferential surface of a sample positive electrode having a circumference of 100 mm and rolled up in the shape of a single complete circle is pressed at a predetermined speed. Specifically, a positive electrode is cut to have a width of 10 mm and a length of 100 mm, and the resultant electrode is rolled up to form a single complete circle with both ends thereof placed on top of each other (see, an overlapping portion 16a in FIG. 5(a)), thereby completing a sample positive electrode 16 with a circumference of 100 mm. Then, as shown in FIG. 5(a), the overlapping portion 16a of the sample positive electrode 16 is fixed by a fixing jig (not shown) placed on a lower flat plate 17b, and the sample positive electrode 16 is sandwiched between an upper flat plate 17a and the lower flat plate 17b. Thereafter, the upper flat plate 17a is moved downward at a speed of 10 mm/min, thereby pressing the circumferential surface of the sample positive electrode 16. At this time, stress applied to the sample positive electrode 16 is measured, and the position of the downward-moved upper flat plate 17a at the time (see, points 19a and 19b in FIG. 5(b)) when an inflection point of this stress is observed (i.e., when the sample positive electrode 16 cannot be deformed any more, as the upper flat plate 17a is moved downward, to be broken) is checked, thereby measuring a gap (i.e., a gap corresponding to the sample positive electrode 16) 18 between the upper flat plate 17a and the lower flat plate 17b. In FIG. 5(b), the solid line schematically indicates the positive electrode of this disclosure, and the broken line schematically indicates a conventional positive electrode. The positive electrode of this disclosure (see, the solid line) can be deformed without breaking until the upper flat plate 17a is further moved downward, as compared to the conventional positive electrode (see, the broken line).

In this embodiment, the following advantages can be obtained.

In this embodiment, by performing heat treatment on the positive electrode at a temperature higher than or equal to the softening temperature of the positive electrode current collector after rolling, the tensile extension percentage of the positive electrode can be increased to 3% or more. Thus, even when the battery is destroyed by crush, the positive electrode is not broken first, and thus, occurrence of short-circuit in the battery can be reduced. Accordingly, the safety of the battery can be enhanced.

In addition, by employing the current collector made of iron-containing aluminium and containing 1.40 wt. % or more of iron as a positive electrode current collector and the binder made of PVDF, the softening temperature of the positive electrode current collector can be reduced below the crystalline melting point of the binder. Further, by performing heat treatment at a temperature higher than or equal to the softening temperature of the positive electrode current collector and lower than the crystalline melting point of the binder, the tensile extension percentage of the positive electrode can be increased to 3% or more. Accordingly, the binder is not melt, and thus, it is possible to prevent the positive electrode active material from being covered with the melted binder during the heat treatment, thereby ensuring reduction of a decrease in the battery capacity to provide a battery exhibiting excellent discharge performance.

Furthermore, the positive electrode current collector has a dynamic hardness of 70 or less. Thus, even when a foreign material enters the electrode group, the positive electrode is deformed according to the shape of the foreign material, thereby reducing penetration of the foreign material into the separator. Accordingly, occurrence of short-circuit in the battery can be reduced, resulting in further enhancing the safety of the battery.

Moreover, the electrode group can be formed by using the positive electrode for which the gap at which an inflection point of stress is observed in a stiffness test is 3 mm or less. Thus, even when the positive electrode is made thick, breakage of the positive electrode in forming the electrode group can be reduced, thereby providing the battery with high productivity. In other words, the positive electrode can be made thick to increase the battery capacity without breakage of the positive electrode in forming the electrode group.

As described above, the positive electrode 4 of this embodiment employs a current collector made of iron-containing aluminium and containing 1.40 wt. % or more of iron as the positive electrode current collector 4A and also employs the binder made of PVDF. The positive electrode 4 is subjected to heat treatment at a temperature higher than or equal to the softening temperature of the positive electrode current collector 4A and lower than the crystalline melting point of the binder after rolling. The positive electrode 4 of this embodiment has features (1), (2), and (3) described above. Accordingly, the nonaqueous electrolyte secondary battery of this embodiment can reduce short-circuit caused by crush while ensuring reduction of a decrease in the battery capacity, can reduce short-circuit caused by entering of a foreign material, and can reduce breakage of the positive electrode in forming the electrode group.

To obtain the advantage of reduction of short-circuit caused by crush, the tensile extension percentages of the negative electrode 5 and the separator 6 in this embodiment also need to be 3% or more. Specifically, first, for example, even if the tensile extension percentages of the positive electrode and the separator are 3% or more, a negative electrode having a tensile extension percentage less than 3% is broken first upon destruction of the battery by crush, and thus, short-circuit occurs in the battery. Second, for example, even if the tensile extension percentages of the positive electrode and the negative electrode are 3% or more, a separator having a tensile extension percentage less than 3% is broken first upon destruction of the battery by crush, and thus, short-circuit occurs in the battery.

In general, separators have tensile extension percentages of 3% or more, whereas most of the negative electrodes have tensile extension percentages of 3% or more, but tensile extension percentages of some of the negative electrodes are lower than 3%. In this embodiment, of course, a negative electrode having a tensile extension percentage of 3% or more is employed. Alternatively, to ensure that the tensile extension percentage of the negative electrode is 3% or more, in forming a negative electrode, the negative electrode may be subjected to heat treatment at a predetermined temperature for a predetermined period after rolling, for example. This process ensures that the tensile extension percentage of the negative electrode is 3% or more.

In this embodiment, the lower limit of the range of the iron amount in the positive electrode current collector 4A is determined to be 1.40 wt. %, whereas the upper limit thereof is not specifically determined. However, the upper limit is, of course, determined not to allow the softening temperature of the positive electrode current collector 4A to be lower than the crystalline melting point of the binder without harmful effects on battery characteristics. In the case where the positive electrode current collector contains a large amount of iron (specifically, the positive electrode current collector contains iron exceeding 1.70 wt. %, for example), it is difficult to dissolve iron in aluminium, and thus, it is expected that $Al_3Fe$ is formed in the positive electrode current collector to harmfully affect characteristics of the battery.

In this embodiment, heat treatment on the positive electrode is performed at a temperature higher than or equal to the softening temperature of the positive electrode current collector and lower than the crystalline melting point of the binder. On the other hand, the period during which heat treatment is performed is not specifically defined, but, of course, is set at a period for which productivity is taken into consideration (i.e., a relatively short period). That is, in this embodiment, since the heat treatment temperature is lower than the crystalline melting point of the binder, even when the heat treatment period is set at a relatively long period, melting of the binder during heat treatment can be effectively prevented. However, the heat treatment period is preferably set at a relatively short period in consideration of productivity.

This embodiment is not limited to a cylindrical battery as illustrated in FIG. 2, and a rectangular battery or a high-power battery may be employed. In addition, the embodiment is not limited to the electrode group 8 in which the positive electrode 4 and the negative electrode 5 are wound with the separator 6 interposed therebetween as illustrated in FIG. 2. Alternatively, an electrode group in which a positive electrode and a negative electrode are stacked with a separator interposed therebetween may be employed.

(SECOND EMBODIMENT)

A method for fabricating a nonaqueous electrolyte secondary battery according to a second embodiment of the present disclosure will be described hereinafter. In this embodiment, aspects different from those in the first embodiment will be mainly described, and the same aspects will not be repeated.

-Method for Forming Positive Electrode-

In -Method for Forming Positive Electrode- of the first embodiment, the positive electrode is subjected to heat treatment at a relatively low temperature. In the second embodiment, a positive electrode is formed in the same manner as in -Method for Forming Positive Electrode- of the first embodiment except that the positive electrode of the second embodiment is subjected to heat treatment at a relatively high temperature for a relatively short period. The "relatively high temperature" herein is a temperature higher than or equal to the crystalline melting point of the binder and lower than the decomposition temperature of the binder. The "relatively short period" herein is a period longer than or equal to 0.1 second and shorter than or equal to one minute.

-Method for Forming Negative Electrode-

A negative electrode according to this embodiment is formed in the same manner as in -Method for Forming Negative Electrode- of the first embodiment.

<Method for Fabricating Battery>

A battery according to this embodiment is fabricated in the same manner as in <Method for Fabricating Battery> of the first embodiment.

Thus, the first embodiment and the second embodiment are the same except for conditions of heat treatment on the positive electrode.

The positive electrode of this embodiment employs a current collector made of iron-containing aluminium and containing 1.40 wt. % or more of iron as a positive electrode current collector and also employs a binder made of PVDF. The positive electrode is subjected to heat treatment at a temperature higher than or equal to the crystalline melting point of the binder and lower than the decomposition temperature of the binder for a relatively short period after rolling.

The positive electrode of this embodiment described above has features (4), (5), and (6) as follows:

(4) The tensile extension percentage is 3% or more;

(5) The dynamic hardness of the positive electrode current collector is 70 or less and the dynamic hardness of the positive electrode material mixture layer is 5 or less; and

(6) The gap at which an inflection point of stress is observed in a stiffness test is 3 mm or less.

In this embodiment, the following advantages can be obtained.

In this embodiment, by performing heat treatment on the positive electrode at a temperature higher than or equal to the crystalline melting point (where the crystalline melting point of the binder > the softening temperature of the positive electrode current collector) of the binder after rolling, the tensile extension percentage of the positive electrode can be increased to 3% or more. Thus, even when the battery is destroyed by crush, the positive electrode is not broken first, and thus, occurrence of short-circuit in the battery can be reduced. Accordingly, the safety of the battery can be enhanced.

In addition, by employing the current collector made of iron-containing aluminium and containing 1.40 wt. % or more of iron as a positive electrode current collector and the binder made of PVDF, the softening temperature of the positive electrode current collector can be reduced below the crystalline melting point of the binder. Further, by performing heat treatment at a temperature higher than or equal to the crystalline melting point of the binder and lower than the decomposition temperature of the binder for a relatively short period, the tensile extension percentage of the positive electrode can be increased to 3% or more. In general, as the period during which the heat treatment is performed on the binder is reduced, the amount of a melted portion of the binder decreases. Thus, the heat treatment period is reduced, thereby reducing the amount of the binder melted in the heat treatment to reduce covering of the positive electrode active material with the melted binder. Accordingly, a decrease in the battery capacity can be minimized, resulting in providing a battery with excellent discharge performance.

Furthermore, the positive electrode current collector has a dynamic hardness of 70 or less and the positive electrode material mixture layer has a dynamic hardness of 5 or less. Thus, even when a foreign material enters an electrode group, the positive electrode is deformed according to the shape of the foreign material, thereby reducing penetration of the foreign material into the separator. Accordingly, occurrence of short-circuit in the battery can be reduced, resulting in further enhancing the safety of the battery.

Moreover, the electrode group can be formed by using the positive electrode for which the gap at which an inflection point of stress is observed in a stiffness test is 3 mm or less. Thus, even when the positive electrode is made thick, breakage of the positive electrode in forming the electrode group can be reduced, thereby providing the battery with high productivity. In other words, the positive electrode can be made thick to increase the battery capacity without breakage of the positive electrode in forming the electrode group.

As described above, the positive electrode of this embodiment employs a current collector made of iron-containing aluminium and containing 1.40 wt. % or more of iron as a positive electrode current collector and also employs a binder made of PVDF. The positive electrode is subjected to heat treatment at a temperature higher than or equal to the crystalline melting point of the binder and lower than the decomposition temperature of the binder for a relatively short period after rolling. The positive electrode of this embodiment has features (4), (5), and (6) described above. Accordingly, the nonaqueous electrolyte secondary battery of this embodiment can reduce short-circuit caused by crush while minimizing a decrease in the battery capacity, can reduce short-circuit caused by entering of a foreign material, and can reduce breakage of the positive electrode in forming the electrode group.

The positive electrodes, the negative electrodes, the separators, and the nonaqueous electrolytes of the nonaqueous electrolyte secondary batteries of the first and second embodiments will be described in detail hereinafter.

First, the positive electrode will be described.

-Positive Electrode-

The positive electrode current collector made of iron-containing aluminium containing 1.40 wt. % or more of iron has a porous or non-porous structure. The thickness of the positive electrode current collector is not specifically limited, but is preferably in the range from 1 $\mu$m to 500 $\mu$m, both inclusive, and more preferably in the range from 10 $\mu$m to 20 $\mu$m, both inclusive. In this manner, the thickness of the positive electrode current collector is set in the range described above, thus making it possible to reduce the weight of the positive electrode while maintaining the strength of the positive electrode.

The positive electrode active material and the conductive agent contained in the positive electrode material mixture layer employing a binder made of PVDF will now be described in order.

<Positive Electrode Active Material>

Examples of the positive electrode active material include $LiCoO_2$ $LiNiO_2$, $LiMnO_2$, $LiCoNiO_2$, $LiCoMO_z$, LiN-

$iMO_z$, $LiMn_2O_4$, $LiMnMO_4$ $LiMePO_4$, and $Li_2MePO_4F$ (where M is at least one of Na, Mg, Sc, Y, Mn, Fe, Co, Ni, Cu, Zn, Al, Cr, Pb, Sb, and B). In these lithium-containing compounds, an element may be partially substituted with an element of a different type. In addition, the positive electrode active material may be a positive electrode active material subjected to a surface process using a metal oxide, a lithium oxide, or a conductive agent, for example. Examples of this surface process include hydrophobization.

<Conductive Agent>

Examples of the conductive agent include graphites such as natural graphite and artificial graphite, carbon blacks such as acetylene black (AB), Ketjen black, channel black, furnace black, lamp black, and thermal black, conductive fibers such as carbon fiber and metal fiber, metal powders such as carbon fluoride and aluminium, conductive whiskers such as zinc oxide and potassium titanate, conductive metal oxides such as titanium oxide, and organic conductive materials such as a phenylene derivative.

Then, the negative electrode is described in detail.

-Negative Electrode-

The negative electrode current collector has a porous or non-porous structure, and is made of, for example, stainless steel, nickel, or copper. The thickness of the negative electrode current collector is not specifically limited, but is preferably in the range from 1 $\mu$m to 500 $\mu$m, both inclusive, and more preferably in the range from 10 $\mu$m to 20 $\mu$m, both inclusive. In this manner, the thickness of the negative electrode current collector is set in the range described above, thus making it possible to reduce the weight of the negative electrode while maintaining the strength of the negative electrode.

The negative electrode active material contained in the negative electrode material mixture layer will now be described.

<Negative Electrode Active Material>

Examples of the negative electrode active material include metal, metal fiber, a carbon material, oxide, nitride, a silicon compound, a tin compound, and various alloys. Examples of the carbon material include various natural graphites, coke, partially-graphitized carbon, carbon fiber, spherical carbon, various artificial graphites, and amorphous carbon.

Since simple substances such as silicon (Si) and tin (Sn), silicon compounds, and tin compounds have high capacitance density, it is preferable to use silicon, tin, a silicon compound, or a tin compound, for example, as the negative electrode active material. Examples of the silicon compound include $SiO_x$ (where $0.05 < x < 1.95$) and a silicon alloy and a silicon solid solution obtained by substituting part of Si forming $SiO_x$ with at least one of the elements selected from the group consisting of B, Mg, Ni, Ti, Mo, Co, Ca, Cr, Cu, Fe, Mn, Nb, Ta, V, W, Zn, C, N, and Sn. Example of the tin compound include $Ni_2Sn_4$, $Mg_2Sn$, $SnO_x$ (where $0 < x < 2$), $SnO_2$, and $SnSiO_3$. One of the examples of the negative electrode active material may be used solely or two or more of them may be used in combination.

Then, the separator is described in detail.

-Separator-

Examples of the separator include a microporous thin film, woven fabric, and nonwoven fabric which have high ion permeability, a predetermined mechanical strength, and a predetermined insulation property. In particular, polyolefin such as polypropylene or polyethylene is preferably used as the separator. Since polyolefin has high durability and a shutdown function, the safety of the lithium ion secondary battery can be enhanced. The thickness of the separator is generally in the range from 10 $\mu$m to 300 $\mu$m, both inclusive, and preferably in the range from 10 $\mu$m to 40 $\mu$m, both inclusive. The thickness of the separator is more preferably in the range from 15 $\mu$m to 30 $\mu$m, both inclusive, and much more preferably in the range from 10 $\mu$m to 25 $\mu$m, both inclusive. In the case of using a microporous thin film as the separator, this microporous thin film may be a single-layer film made of a material of one type, or may be a composite film or a multilayer film made of one or more types of materials. The porosity of the separator is preferably in the range from 30% to 70%, both inclusive, and more preferably in the range from 35% to 60%, both inclusive. The porosity herein is the volume ratio of pores to the total volume of the separator.

Then, the nonaqueous electrolyte is described in detail.

-Nonaqueous Electrolyte-

The nonaqueous electrolyte contains an electrolyte and a nonaqueous solvent in which this electrolyte is dissolved.

As the nonaqueous solvent, a known nonaqueous solvent may be used. The type of this nonaqueous solvent is not specifically limited, and examples of the nonaqueous solvent include cyclic carbonic ester, chain carbonic ester, and cyclic carboxylate ester. Cyclic carbonic ester may be propylene carbonate (PC) or ethylene carbonate (EC), for example. Chain carbonic ester may be diethyl carbonate (DEC), ethylmethyl carbonate (EMC), or dimethyl carbonate (DMC), for example. Cyclic carboxylate ester may be $\gamma$-butyrolactone (GBL) or $\gamma$-valerolactone (GVL). One of the examples of the nonaqueous solvent may be used solely or two or more of them may be used in combination.

Examples of the electrolyte include $LiClO_4$, $LiBF_4$, $LiPF_6$, $LiAlCl_4$, $LiSbF_6$, LiSCN, $LiCF_3SO_3$, $LiCF_3CO_2$, $LiAsF_6$, $LiB_{10}Cl_{10}$, lower aliphatic lithium carboxylate, LiCl, LiBr, LiI, chloroborane lithium, borates, and imidates. Examples of the borates include bis(1,2-benzene diorate(2-)-O,O')lithium borate, bis(2,3-naphthalene diorate(2-)-O,O')lithium borate, bis(2,2'-biphenyl diorate(2-)-O,O')lithium borate, and bis(5-fluoro-2-orate-1-benzenesulfonic acid-O,O')lithium borate. Examples of the imidates include lithium bistrifluoromethanesulfonimide $((CF_3SO_2)_2NLi)$, lithium trifluoromethanesulfonate nonafluorobutanesulfonimide $(LiN(CF_3SO_2)(C_4F_9SO_2))$, and lithium bispentafluoroethanesulfonimide $((C_2F_5SO_2)_2NLi)$. One of these electrolytes may be used solely or two or more of them may be used in combination.

The amount of the electrolyte dissolved in the nonaqueous solvent is preferably in the range from 0.5 mol/m$^3$ to 2 mol/m$^3$, both inclusive.

The nonaqueous electrolyte may contain an additive which is decomposed on the negative electrode and forms thereon a coating having high lithium ion conductivity to enhance the charge-/discharge efficiency of the battery, for example, in addition to the electrolyte and the nonaqueous solvent. Examples of the additive having such a function include vinylene carbonate (VC), 4-methylvinylene carbonate, 4,5-dimethylvinylene carbonate, 4-ethylvinylene carbonate, 4,5-diethylvinylene carbonate, 4-propylvinylene carbonate, 4,5-dipropylvinylene carbonate, 4-phenylvinylene carbonate, 4,5-diphenylvinylene carbonate, vinyl ethylene carbonate (VEC), and divinyl ethylene carbonate. One of the additives may be used solely or two or more of them may be used in combination. Among the additives, at least one selected from the group consisting of vinylene carbonate, vinyl ethylene carbonate, and divinyl ethylene carbonate is preferable. In the above-listed additives, hydrogen atoms may be partially substituted with fluorine atoms.

The nonaqueous electrolyte may further contain, for example, a known benzene derivative which is decomposed during overcharge and forms a coating on the electrode to inactivate the battery, in addition to the electrolyte and the nonaqueous solvent. The benzene derivative having such a function preferably includes a phenyl group and a cyclic compound group adjacent to the phenyl group. Examples of the benzene derivative include cyclohexylbenzene, biphenyl, and diphenyl ether. Examples of the cyclic compound group included in the benzene derivative include a phenyl group, a cyclic ether group, a cyclic ester group, a cycloalkyl group, and a phenoxy group. One of the benzene derivatives may be used solely or two or more of them may be used in combination. However, the content of the benzene derivative in the nonaqueous solvent is preferably 10 volume percent (vol. %) or less of the total volume of the nonaqueous solvent.

Examples 1 and 2 and Comparative Examples will be described hereinafter in detail.

<Example 1>

(Battery 1)

(Formation of Positive Electrode)

First, $LiNi_{0.82}Co_{0.15}Al_{0.03}O_2$ having an average particle diameter of 10 $\mu$m was prepared.

Next, 4.5 vol. % of acetylene black as a conductive agent, a solution in which 4.7 vol. % of PVDF (specifically, PVDF7200 having a crystalline melting point of 172°C and produced by Kureha Corporation) as a binder was dissolved in a N-methyl pyrrolidone (NMP) solvent, and 100 parts by weight (pbw) of $LiNi_{0.82}Co_{0.15}Al_{0.03}O_2$ as a positive electrode active material were mixed, thereby obtaining positive electrode material mixture slurry. This positive electrode material mixture slurry was applied onto both surfaces of aluminium foil (specifically, aluminium alloy foil, BESPA FS 115 (A8021H-H18), containing 1.44 wt. % of iron, having a softening temperature of 160°C, and produced by SUMIKEI ALUMINUM FOIL, Co., Ltd.) made of iron-containing aluminium and having a thickness of 15 $\mu$m as a positive electrode current collector, and was dried. Thereafter, the resultant positive electrode current collector whose both surfaces were coated with the dried positive electrode material mixture slurry was rolled, thereby obtaining a positive electrode plate in the shape of a plate having a thickness of 0.178 mm. This positive electrode plate was then subjected to heat treatment for 60 seconds by bringing the positive electrode plate into contact with a heated roll produced by TOKUDEN Co., Ltd. and heated to 165°C. Subsequently, the positive electrode plate was cut to have a width of 57.5 mm and a length of 503 mm, thereby obtaining a positive electrode having a thickness of 0.178 mm, a width of 57.5 mm, and a length of 503 mm.

(Formation of Negative Electrode)

First, flake artificial graphite was ground and classified to have an average particle diameter of about 20 $\mu$m.

Then, 1 pbw of styrene butadiene rubber as a binder and 100 pbw of a solution containing 1 wt. % of carboxymethyl cellulose were added to 100 pbw of flake artificial graphite as a negative electrode active material, and these materials were mixed, thereby obtaining negative electrode material mixture slurry. This negative electrode material mixture slurry was then applied onto both surfaces of copper foil with a thickness of 8 $\mu$m as a negative electrode current collector, and was dried. Thereafter, the resultant negative electrode current collector whose both surfaces were coated with the dried negative electrode material mixture slurry was rolled, thereby obtaining a negative electrode plate in the shape of a plate having a thickness of 0.210 mm. This negative electrode plate was subjected to heat treatment in a nitrogen atmosphere at 190°C for 5 hours. The negative electrode plate was then cut to have a width of 58.5 mm and a length of 510 mm. This negative electrode had a tensile extension percentage of 5% (i.e., 3% or more).

(Preparation of Nonaqueous Electrolyte)

To a solvent mixture of ethylene carbonate, ethyl methyl carbonate, and dimethyl carbonate in the volume ratio of 1 : 1 : 8 as a nonaqueous solvent, 3 wt. % of vinylene carbonate was added as an additive for increasing the charge/discharge efficiency of the battery, and $LiPF_6$ as an electrolyte was dissolved in an amount of 1.4 mol/m$^3$ with respect to the nonaqueous solvent, thereby obtaining a nonaqueous electrolyte solution.

(Formation of Cylindrical Battery)

First, a positive electrode lead made of aluminium was attached to the positive electrode current collector, and a negative electrode lead made of nickel was attached to the negative electrode current collector. Then, the positive electrode and the negative electrode were wound with a polyethylene separator (specifically, a separator having a tensile extension percentage of 8% (i.e., 3% or more)) interposed therebetween, thereby forming an electrode group. Thereafter, an upper insulating plate was placed at the upper end of the electrode group, and a lower insulating plate was placed at the bottom end of the electrode group. Subsequently, the negative electrode lead was welded to a battery case, and the positive electrode lead was welded to a sealing plate including a safety valve operated with inner pressure, thereby housing the electrode group in the battery case. Then, a nonaqueous electrolyte was poured in the battery case under a reduced pressure. Lastly, an opening end of the battery case was sealed with the sealing plate with a gasket interposed therebetween, thereby fabricating a battery.

The battery including the positive electrode subjected to heat treatment using a heated roll at 165°C (i.e., higher than or equal to the softening temperature, i.e., 160°C, of the positive electrode current collector and lower than the crystalline melting point, i.e., 172°C, of the binder) in the foregoing manner will be hereinafter referred to as a battery 1.

(Battery 2)

A battery 2 was fabricated in the same manner as the battery 1 except that heat treatment was performed on the positive electrode plate by bringing the positive electrode plate into contact with a heated roll at 165°C for 5 hours in (Formation of Positive Electrode).

(Battery 3)

A battery 3 was fabricated in the same manner as the battery 1 except that heat treatment was performed on the positive electrode plate by bringing the positive electrode plate into contact with a heated roll at 170°C for 20 seconds in (Formation of Positive Electrode).

(Battery 4)

A battery 4 was fabricated in the same manner as the battery 1 except that heat treatment was performed on the positive electrode plate by bringing the positive electrode plate into contact with a heated roll at 170°C for 5 hours in (Formation of Positive Electrode).

<Example 2>

(Battery 5)

A battery 5 was fabricated in the same manner as the battery 1 except that heat treatment was performed on the positive electrode plate by bringing the positive electrode plate into contact with a heated roll at 175°C for 10 seconds in (Formation of Positive Electrode).

(Battery 6)

A battery 6 was fabricated in the same manner as the battery 1 except that heat treatment was performed on the positive electrode plate by bringing the positive electrode plate into contact with a heated roll at 190°C for 5 seconds in (Formation of Positive Electrode).

(Battery 7)

A battery 7 was fabricated in the same manner as the battery 1 except that heat treatment was performed on the positive electrode plate by bringing the positive electrode plate into contact with a heated roll at 190°C for 10 seconds in (Formation of Positive Electrode).

(Battery 8)

A battery 8 was fabricated in the same manner as the battery 1 except that heat treatment was performed on the positive electrode plate by bringing the positive electrode plate into contact with a heated roll at 200°C for 3 seconds in (Formation of Positive Electrode).

(Battery 9)

A battery 9 was fabricated in the same manner as the battery 1 except that heat treatment was performed on the positive electrode plate by bringing the positive electrode plate into contact with a heated roll at 200°C for 5 seconds in (Formation of Positive Electrode).

(Battery 10)

A battery 10 was fabricated in the same manner as the battery 1 except that heat treatment was performed on the positive electrode plate by bringing the positive electrode plate into contact with a heated roll at 220°C for one second in (Formation of Positive Electrode).

(Battery 11)

A battery 11 was fabricated in the same manner as the battery 1 except that heat treatment was performed on the positive electrode plate by bringing the positive electrode plate into contact with a heated roll at 250°C for 0.7 seconds in (Formation of Positive Electrode).

(Battery 12)

A battery 12 was fabricated in the same manner as the battery 1 except that heat treatment was performed on the positive electrode plate by bringing the positive electrode plate into contact with a heated roll at 280°C for 0.4 seconds in (Formation of Positive Electrode).

(Battery 13)

A battery 13 was fabricated in the same manner as the battery 1 except that heat treatment was performed on the positive electrode plate by bringing the positive electrode plate into contact with a heated roll at 175°C for 5 hours in (Formation of Positive Electrode).

(Battery 14)

A battery 14 was fabricated in the same manner as the battery 1 except that heat treatment was performed on the positive electrode plate by bringing the positive electrode plate into contact with a heated roll at 190°C for 5 hours in (Formation of Positive Electrode).

(Battery 15)

A battery 15 was fabricated in the same manner as the battery 1 except that heat treatment was performed on the positive electrode plate by bringing the positive electrode plate into contact with a heated roll at 200°C for 5 hours in (Formation of Positive Electrode).

(Battery 16)

A battery 16 was fabricated in the same manner as the battery 1 except that heat treatment was performed on the positive electrode plate by bringing the positive electrode plate into contact with a heated roll at 220°C for 5 hours in (Formation of Positive Electrode).

(Battery 17)

A battery 17 was fabricated in the same manner as the battery 1 except that heat treatment was performed on the positive electrode plate by bringing the positive electrode plate into contact with a heated roll at 250°C for 5 hours in (Formation of Positive Electrode).

(Battery 18)

A battery 18 was fabricated in the same manner as the battery 1 except that heat treatment was performed on the positive electrode plate by bringing the positive electrode plate into contact with a heated roll at 280°C for 5 hours in (Formation of Positive Electrode).

<Comparative Example>

(Battery 19)

A battery 19 was fabricated in the same manner as the battery 1 except that heat treatment was not performed on the positive electrode plate in (Formation of Positive Electrode).

(Battery 20)

A battery 20 was fabricated in the same manner as the battery 1 except that heat treatment was performed on the positive electrode plate by bringing the positive electrode plate into contact with a heated roll at 150°C for 5 hours in (Formation of Positive Electrode).

(Battery 21)

A battery 21 was fabricated in the same manner as the battery 1 except that heat treatment was performed on the positive electrode plate by bringing the positive electrode plate into contact with a heated roll at 165°C for 20 seconds in (Formation of Positive Electrode).

(Battery 22)

A battery 22 was fabricated in the same manner as the battery 1 except that heat treatment was performed on the positive electrode plate by bringing the positive electrode plate into contact with a heated roll at 170°C for 10 seconds in (Formation of Positive Electrode).

(Battery 23)

A battery 23 was fabricated in the same manner as the battery 1 except that heat treatment was performed on the positive electrode plate by bringing the positive electrode plate into contact with a heated roll at 175°C for 5 seconds in (Formation of Positive Electrode).

(Battery 24)

A battery 24 was fabricated in the same manner as the battery 1 except that heat treatment was performed on the positive electrode plate by bringing the positive electrode plate into contact with a heated roll at 190°C for 3 seconds in (Formation of Positive Electrode).

(Battery 25)

A battery 25 was fabricated in the same manner as the battery 1 except that heat treatment was performed on the positive electrode plate by bringing the positive electrode plate into contact with a heated roll at 200°C for one second in (Formation of Positive Electrode).

(Battery 26)

A battery 26 was fabricated in the same manner as the battery 1 except that heat treatment was performed on the positive electrode plate by bringing the positive electrode plate into contact with a heated roll at 220°C for 0.7 seconds in (Formation of Positive Electrode).

(Battery 27)

A battery 27 was fabricated in the same manner as the battery 1 except that heat treatment was performed on the positive electrode plate by bringing the positive electrode plate into contact with a heated roll at 250°C for 0.4 seconds in (Formation of Positive Electrode).

(Battery 28)

A battery 28 was fabricated in the same manner as the battery 1 except that heat treatment was performed on the positive electrode plate by bringing the positive electrode plate into contact with a heated roll at 280°C for 0.2 seconds in (Formation of Positive Electrode).

(Battery 29)

A battery 29 was fabricated in the same manner as the battery 1 except that aluminium foil made of high-purity aluminium with a thickness of 15 $\mu$m (specifically, A1085-H18 containing no iron, having a softening temperature of 250°C, and produced by SUMIKEI ALUMINUM FOIL, Co., Ltd) was used as the positive electrode current collector and that heat treatment was not performed on the positive electrode plate in (Formation of Positive Electrode).

(Battery 30)

A battery 30 was fabricated in the same manner as the battery 1 except that A1085-H18 having a thickness of 15 $\mu$m and produced by SUMIKEI ALUMINUM FOIL, Co., Ltd (hereinafter referred to as "A1085") was used as the positive electrode current collector and that heat treatment was performed on the positive electrode plate by bringing the positive electrode plate into contact with a heated roll at 190°C for 5 seconds in (Formation of Positive Electrode).
In the foregoing manner, the batteries 1-30 were fabricated. In each of the batteries 19-30 of Comparative Example, cracks which do not cause breakage were observed in parts of the positive electrode in forming the electrode group. However, these batteries were fabricated while keeping such cracks, and then were subjected to a measurement, a test, and an evaluation which will be described later.
For each of the batteries 1-30, the tensile extension percentage of the positive electrode, the dynamic hardness of the positive electrode current collector, and a gap in the stiffness test on the positive electrode were measured. The measurements were carried out in the following manner.

<Measurement of Tensile Extension Percentage of Positive Electrode>

First, each of the batteries 1-30 was charged to a voltage of 4.25 V at a constant current of 1.45 A, and was charged to a current of 50 mA at a constant voltage. Then, each of the resultant batteries 1-30 was disassembled, and a positive electrode was taken out. This positive electrode was then cut to have a width of 15 mm and an effective length of 20 mm, thereby forming a sample positive electrode. Thereafter, one end of the sample positive electrode was fixed, and the other end of the sample positive electrode was extended along the longitudinal direction thereof at a speed of 20 mm/min. At this time, the length of the sample positive electrode immediately before breakage was measured. Using the obtained length and the length (i.e., 20 mm) before the extension of the sample positive electrode, the tensile extension percentage of the positive electrode was calculated. The tensile extension percentage of the positive electrode of each of the batteries 1-4 of Example 1 and the batteries 5-18 of Example 2 was 3% or more. On the other hand, the tensile extension percentage of the positive electrode of each of the batteries 19-30 of Comparative Example was less than 3%.

<Measurement of Dynamic Hardness of Positive Electrode Current Collector>

First, each of the batteries 1-30 was charged to a voltage of 4.25 V at a constant current of 1.45 A, and was charged to a current of 50 mA at a constant voltage. Then, each of the resultant batteries 1-30 was disassembled, and a positive electrode was taken out. For this positive electrode, the dynamic hardness of the positive electrode current collector was measured with Shimadzu Dynamic Ultra Micro Hardness Tester DUH-W201. The dynamic hardness of the current collector of each of the batteries 1-4 of Example 1 and the batteries 5-18 of Example 2 was less than or equal to 70. On the other hand, dynamic hardness of the current collector of each of the batteries 19-30 of Comparative Example was more than 70.

<Measurement of Gap in Stiffness Test of Positive Electrode>

First, each of the batteries 1-30 was charged to a voltage of 4.25 V at a constant current of 1.45 A, and was charged to a current of 50 mA at a constant voltage. Then, each of the resultant batteries 1-30 was disassembled, and a positive electrode was taken out. This positive electrode was cut to have a width of 10 mm and a length of 100 mm. The resultant positive electrode was rolled up to form a single complete circle with both ends thereof placed on top of each other, thereby forming a sample positive electrode. The overlapping portion of the sample positive electrode was fixed by a fixing jig placed on a lower flat plate. Then, the sample positive electrode in the shape of a complete circle in cross section with an outer circumference of 100 mm was sandwiched between the lower flat plate and an upper flat plate placed above the lower flat plate. Thereafter, the upper flat plate was moved downward at a speed of 10 mm/min, thereby pressing the circumferential surface of the sample positive electrode. At this time, stress on the sample positive electrode was measured, thereby measuring a gap for the sample positive electrode at the time when the inflection point was detected. In this measurement, the gap in the stiffness test of the positive electrode in each of the batteries 1-4 of Example 1 and the batteries 5-18 of Example 2 was 3 mm or less. On the other hand, the gap in the stiffness test of the positive electrode in each of the batteries 19-30 of Comparative Example was more than 3 mm.

The battery capacity was measured for each of the batteries 1-30 in the following manner.

<Measurement of Battery Capacity >

Each of the batteries 1-30 was charged to a voltage of 4.2 V at a constant current of 1.5 A in an atmosphere of 25°C, and was charged to a current of 50 mA at a constant voltage of 4.2 V. Then, the battery was discharged to a voltage of 2.5 V at a constant current of 0.6 A, and the capacity of the battery at this time was measured. The "battery capacity [Ah]" of each of the batteries 1-4 of Example 1 is shown in Table 1 below. The "battery capacity [Ah]" of each of the batteries 5-18 of Example 2 is shown in Table 2 below. The "battery capacity [Ah]" of each of the batteries 19-30 of Comparative Example is shown in Table 3 below.

For each of the batteries 1-30, a crush test, a foreign material entering test, and an electrode plate breakage evaluation were conducted in the following manner.

<Crush Test>

First, each of the batteries 1-30 was charged to a voltage of 4.25 V at a constant current of 1.45 A, and was charged to a current of 50 mA at a constant voltage. Then, a round bar with a diameter of 6 mm was brought into contact with each of the batteries 1-30 at a battery temperature of 30°C, and was moved in the depth direction of the battery at a speed of 0.1 mm/sec. In this manner, each of the batteries 1-30 was crushed. The amount of deformation along the depth of the battery at the time of occurrence of short-circuit in the battery was measured with a displacement sensor. Results of the crush test (i.e., the "short-circuit depth [mm]") on each of the batteries 1-4 of Example 1 are shown in Table 1 below. The "short-circuit depth [mm]" of each of the batteries 5-18 of Example 2 is shown in Table 2 below. The "short-circuit depth [mm]" of each of the batteries 19-30 of Comparative Example is shown in Table 3 below.

<Foreign Material Entering Test>

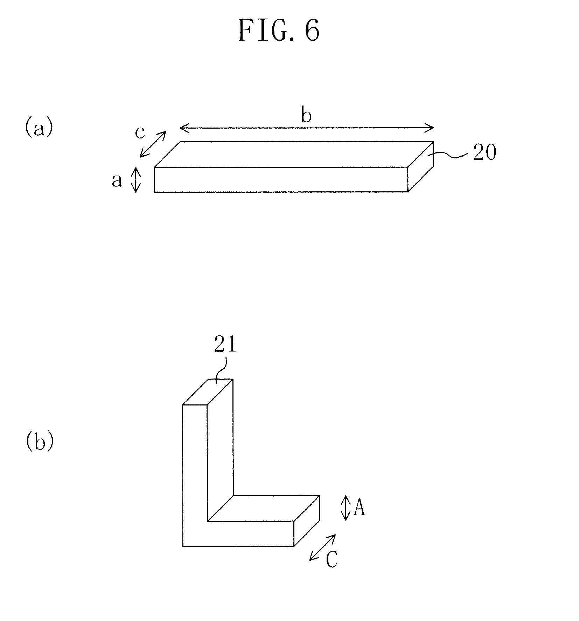

First, 20 cells of each of the batteries 1-30 were prepared. Then, each of the batteries 1-30 was charged to a voltage of 4.25 V at a constant current of 1.45 A, and was charged to a current of 50 mA at a constant voltage. Then, the electrode group was taken out from the battery case. Subsequently, a nickel plate 20 having a thickness of 0.1 mm (see, a in FIG. 6(a)), a length of 2 mm (see, b in FIG. 6(a)), and a width of 0.2 mm (see, c in FIG. 6(a)) was bent at an arbitrary point on the length of 2 mm, thereby obtaining a nickel plate 21 1 in the shape of L in cross section having a thickness of 0.1 mm (see, A in FIG. 6(b)) and a height of 0.2 mm (see, C in FIG. 6(b)). This nickel plate 21 was interposed between the positive electrode and the separator at respective portions thereof closest to the outermost circumference of the electrode group with the height direction of the nickel plate 21 oriented perpendicularly to the surfaces of the positive electrode and the separator (i.e., the thickness direction of the nickel plate 21 being in parallel with the surfaces of the positive electrode and the separator). This electrode group in which the nickel plate 21 was interposed between the positive electrode and the separator was then placed in the battery case again. Subsequently, each of the batteries 1-30 was pressed at a pressure of 800 N/cm$^2$. Then, out of the 20 cells, the number of cells showing occurrence of short-circuit was counted for each of the batteries 1-30. Results (i.e., the "number of short-circuits") of the foreign material entering test on each of the batteries 1-4 of Example 1 are shown in Table 1 below. The "number of short-circuits" of each of the batteries 5-18 of Example 2 is shown in Table 2 below. The "number of short-circuits" of each of the batteries 19-30 of Comparative Example is shown in Table 3 below.

<Electrode Plate Breakage Evaluation>

Using a winding core with a diameter of 3 mm, the positive electrode and the negative electrode were wound with the separator interposed therebetween with a tension of 1.2 kg applied, thereby preparing 50 cells of each of the batteries 1-30. In each of the batteries 1-30, the number of broken positive electrodes among the 50 cells (i.e., the number of broken positive electrodes per 50 cells) was counted. Results (i.e., the "number of breakages") of the electrode plate breakage evaluation on each of the batteries 1-4 of Example 1 are shown in Table 1 below. The "number of breakages" of each of the batteries 5-18 of Example 2 is shown in Table 2 below. The "number of breakages" of each of the batteries 19-30 of Comparative Example is shown in Table 3 below.

[Table 1]

| | Current Collector | Heat Treatment Condition | | Battery Capacity [Ah] | Short-circuit Depth [mm] | Number of Short-circuits | Number of Breakages |
|---|---|---|---|---|---|---|---|
| | | [°C/sec] | [°C/h] | | | | |
| Battery 1 | A8021 | 165/60 | | 3.10 | 8 | 0/20 | 0/50 |
| Battery 2 | A8021 | | 165/5 | 3.08 | 8 | 0/20 | 0/50 |
| Battery 3 | A8021 | 170/20 | | 3.10 | 8 | 0/20 | 0/50 |
| Battery 4 | A8021 | | 170/5 | 3.02 | 9 | 0/20 | 0/50 |

[Table 2]

| | Current Collector | Heat Treatment Condition | | Battery Capacity [Ah] | Short-circuit Depht [mm] | Number of Short-circuits | Number of Breakages |
|---|---|---|---|---|---|---|---|
| | | [°C/sec] | [°C/h] | | | | |
| Battery 5 | A8021 | 175/10 | | 3.10 | 9 | 0/20 | 0/50 |
| Battery 6 | A8021 | 190/5 | | 3.10 | 9 | 0/20 | 0/50 |
| Battery 7 | A8021 | 190/10 | | 3.07 | 9 | 0/20 | 0/50 |
| Battery 8 | A8021 | 200/3 | | 3.10 | 9 | 0/20 | 0/50 |
| Battery 9 | A8021 | 200/5 | | 3.07 | 9 | 0/20 | 0/50 |
| Battery 10 | A8021 | 220/1 | | 3.10 | 9 | 0/20 | 0/50 |

(continued)

| | Current Collector | Heat Treatment Condition | | Battery Capacity [Ah] | Short-circuit Depht [mm] | Number of Short-circuits | Number of Breakages |
|---|---|---|---|---|---|---|---|
| | | [°C/sec] | [°C/h] | | | | |
| Battery 11 | A8021 | 250/0.7 | | 3.10 | 9 | 0/20 | 0/50 |
| Battery 12 | A8021 | 280/0.4 | | 3.10 | 9 | 0/20 | 0/50 |
| Battery 13 | A8021 | | 175/5 | 2.98 | 9 | 0/20 | 0/50 |
| Battery 14 | A8021 | | 190/5 | 2.92 | 9 | 0/20 | 0/50 |
| Battery 15 | A8021 | | 200/5 | 2.88 | 9 | 0/20 | 0/50 |
| Battery 16 | A8021 | | 220/5 | 2.84 | 9 | 0/20 | 0/50 |
| Battery 17 | A8021 | | 250/5 | 2.80 | 9 | 0/20 | 0/50 |
| Battery 18 | A8021 | | 280/5 | 2.70 | 9 | 0/20 | 0/50 |

[Table 3]

| | Current Collector | Heat Treatment Condition | | Battery Capacity [Ah] | Short-circuit Depth [mm] | Number of Short-circuits | Number of Breakages |
|---|---|---|---|---|---|---|---|
| | | [°C/sec] ; | [°C/h] | | | | |
| Battery 19 | A8021 | None | | 3.10 | 5~6 | 20/20 | 50/50 |
| Battery 20 | A8021 | | 150/5 | 3.10 | 5~6 | 20/20 | 50/50 |
| Battery 21 | A8021 | 165/20 | | 3.10 | 5~6 | 20/20 | 50/50 |
| Battery 22 | A8021 | 170/10 | | 3.10 | 5~6 | 20/20 | 50/50 |
| Battery 23 | A8021 | 175/5 | | 3.10 | 5~6 | 20/20 | 50/50 |
| Battery 24 | A8021 | 190/3 | | 3.10 | 5~6 | 20/20 | 50/50 |
| Battery 25 | A8021 | 200/1 | | 3.10 | 5~6 | 20/20 | 50/50 |
| Battery 26 | A8021 | 220/0.7 | | 3.10 | 5~6 | 20/20 | 50/50 |
| Battery 27 | A8021 | 250/0.4 | | 3.10 | 5~6 | 20/20 | 50/50 |
| Battery 28 | A8021 | 280/0.2 | | 3.10 | 5~6 | 20/20 | 50/50 |
| Battery 29 | A1085 | None | | 3.10 | 5~6 | 20/20 | 50/50 |
| Battery 30 | A1085 | 190/5 | | 3.10 | 5~6 | 20/20 | 50/50 |

-Comparison of Example 1-

The batteries 1-4 of Example 1 will now be compared with the batteries 19-22 of Comparative Example based on Table 1 (for the batteries 1-4) and Table 3 (for the batteries 19-22). In this comparison, each of the batteries 1-4 of Example 1 includes a positive electrode subjected to heat treatment at a temperature higher than or equal to the softening temperature of the positive electrode current collector and lower than the crystalline melting point of the binder.

The battery 19 including a positive electrode not subjected to heat treatment does not have the advantages of (A) reducing short-circuit caused by crush, (B) reducing short-circuit caused by entering of a foreign material, and (C) reducing breakage of the positive electrode in forming the electrode group (hereinafter referred to as advantages (A)-(C)).

The battery 20 including a positive electrode subjected to heat treatment with a heated roll at 150°C does not have the advantages (A)-(C) because the temperature of the heated roll is lower than the softening temperature (i.e., 160°C) of the positive electrode current collector.

Among the batteries 1, 2, and 21 each including the positive electrode subjected to heat treatment with a heated roll at 165°C, the batteries 1 and 2 have the advantages (A)-(C), while ensuring reduction of a decrease in the battery capacity. On the other hand, the battery 21 does not have the advantages (A)-(C). The battery 2 is brought into contact with the heated roll for a longer period, but has a larger battery capacity, than the battery 1. Specifically, the results on the batteries 1, 2, and 21 show that the period during which the battery including the positive electrode subjected to heat treatment with a heated roll at 165°C is in contact with the heated roll is preferably longer than 20 seconds. The results also show that even if the contact period with the heated roll is 5 hours, the advantages (A)-(C) can be obtained, while ensuring reduction of a decrease in the battery capacity.

In the same manner, the results on the batteries 3, 4, and 22 show that the battery including the positive electrode subjected to heat treatment with a heated roll at 170°C is preferably in contact with the heated roll for a period longer than 10 seconds. The results also show that even if the contact period with the heated roll is 5 hours, the advantages (A)-(C) can be obtained, while ensuring reduction of a decrease in the battery capacity.

As described above, the use of a current collector made of iron-containing aluminium and containing 1.40 wt. % or more of iron as a positive electrode current collector and the use of a binder made of PVDF can reduce the softening temperature of the positive electrode current collector below the crystalline melting point of the binder. The heat treatment performed at a temperature higher than or equal to the softening temperature of the positive electrode current collector and lower than the crystalline melting point of the binder can ensure reduction of a decrease in the battery capacity and can increase the tensile extension percentage of the positive electrode to 3% or more, thereby reducing short-circuit caused by crush. In addition, the dynamic hardness of the positive electrode current collector is set at 70 or less, thereby reducing short-circuit caused by entering of a foreign material. Further, the gap in the stiffness test of the positive electrode is set at 3 mm or less, thereby reducing breakage of the positive electrode in forming the electrode group.

-Comparison of Example 2-

The batteries 5-18 of Example 2 and batteries 23-28 of Comparative Example will be compared based on Table 2 (batteries 5-18) and Table 3 (batteries 23-28). The batteries 5-18 of Example 2 herein are batteries each including a positive electrode subjected to heat treatment at a temperature higher than or equal to the crystalline melting point of a binder and lower than the decomposition temperature of the binder.

Among the batteries 5, 13, and 23 each including the positive electrode subjected to heat treatment with a heated roll at 175°C, the batteries 5 and 13 have the advantages (A)-(C). On the other hand, the battery 23 does not have the advantages (A)-(C). The battery 5 is in contact with a heated roll for a shorter period, and thus has a larger battery capacity, than the battery 13. Specifically, the results on the batteries 5, 13, and 23 show that the battery including the positive electrode subjected to heat treatment with a heated roll at 175°C is preferably in contact with the heated roll for a period longer than 5 seconds. The results also show that the period during which the battery is in contact with the heated roll is preferably less than 5 hours in order to minimize a decrease in the battery capacity.

In the same manner, the results on the batteries 6, 7, 14, and 24 show that the battery including a positive electrode subjected to heat treatment with a heated roll at 190°C is preferably in contact with the heated roll for a period longer than 3 seconds. The results also show that the period during which the positive electrode is in contact with the heated roll is preferably less than 5 hours in order to minimize a decrease in the battery capacity.

In the same manner, the results on the batteries 8, 9, 15, and 25 show that the battery including a positive electrode subjected to heat treatment with a heated roll at 200°C is preferably in contact with the heated roll for a period longer than one second. The results also show that the period during which the positive electrode is in contact with the heated roll is preferably less than 5 hours in order to minimize a decrease in the battery capacity.

In the same manner, the results on the batteries 10, 16, and 26 show that the battery including a positive electrode subjected to heat treatment with a heated roll at 220°C is preferably in contact with the heated roll for a period longer than 0.7 seconds. The results also show that the period during which the positive electrode is in contact with the heated roll is preferably less than 5 hours in order to minimize a decrease in the battery capacity.

In the same manner, the results on the batteries 11, 17, and 27 show that the battery including a positive electrode subjected to heat treatment with a heated roll at 250°C is preferably in contact with the heated roll for a period longer than 0.4 seconds. The results also show that the period during which the positive electrode is in contact with the heated roll is preferably less than 5 hours in order to minimize a decrease in the battery capacity.

In the same manner, the results on the batteries 12, 18, and 28 show that the battery including a positive electrode subjected to heat treatment with a heated roll at 280°C is preferably in contact with the heated roll for a period longer than 0.2 seconds. The results also show that the period during which the positive electrode is in contact with the heated roll is preferably less than 5 hours in order to minimize a decrease in the battery capacity.

As described above, the use of a current collector made of iron-containing aluminium and containing 1.40 wt. % or more of iron as a positive electrode current collector and the use of a binder made of PVDF can reduce the softening temperature of the positive electrode current collector below the crystalline melting point of the binder. The heat treatment performed at a temperature higher than or equal to the crystalline melting point of the binder and lower than the decomposition temperature of the binder for a relatively short period can minimize a decrease in the battery capacity and can increase the tensile extension percentage of the positive electrode to 3% or more, thereby reducing short-circuit caused by crush. In addition, the dynamic hardness of the positive electrode current collector is set at 70 or less and the dynamic hardness of the positive electrode material mixture layer is set at 5 or less , thereby reducing short-circuit caused by entering of a foreign material. Further, the gap in the stiffness test of the positive electrode is set at 3 mm or less, thereby reducing breakage of the positive electrode in forming the electrode group.

The results on the batteries 29 and 30 each using A1085 as a positive electrode current collector show that the battery 29 including the positive electrode not subjected to heat treatment does not have the advantages (A)-(C). The results also show that the battery 30 including the positive electrode subjected to heat treatment with a heated roll at 190°C does not have the advantages (A)-(C) because the temperature of the heated roll is lower than the softening temperature (i.e., 250°C) of the positive electrode current collector.

INDUSTRIAL APPLICABILITY

As described above, the present disclosure may be useful for devices such as household power supplies with, for example, higher energy density, power supplies to be installed in vehicles, and power supplies for large tools.

DESCRIPTION OF REFERENCE CHARACTERS

| | |
|---|---|
| 1 | battery case |
| 2 | sealing plate |
| 3 | gasket |
| 4 | positive electrode |
| 4a | positive electrode lead |
| 5 | negative electrode |
| 5a | negative electrode lead |
| 6 | separator (porous insulating layer) |
| 7a | upper insulating plate |
| 7b | lower insulating plate |
| 8 | electrode group |
| 4A | positive electrode current collector |
| 4B | positive electrode material mixture layer |
| 5A | negative electrode current collector |
| 5B | negative electrode material mixture layer |
| 9 | sample positive electrode |
| 10a | upper chuck |
| 10b | lower chuck |
| 11 | base |
| 12 | positive electrode of the invention |
| 12A | positive electrode current collector |
| 12B | positive electrode material mixture layer |
| 13 | crack |
| 14 | conventional positive electrode |
| 15 | crack |
| 16 | sample positive electrode |
| 16a | overlapping portion |
| 17a | upper flat plate |
| 17b | lower flat plate |
| 18 | gap |
| 19a, 19b | inflection point |
| 20 | nickel plate |
| 21 | nickel plate |
| 19 | sample positive electrode |
| a | thickness |
| b | length |
| c | width |
| A | thickness |

C        height

**Claims**

1.  A nonaqueous electrolyte secondary battery, comprising:

    a positive electrode including a positive electrode current collector and a positive electrode material mixture layer containing a positive electrode active material and a binder and provided on the positive electrode current collector;
    a negative electrode;
    a porous insulating layer interposed between the positive electrode and the negative electrode; and
    a nonaqueous electrolyte, wherein
    the positive electrode has a tensile extension percentage of 3.0% or more,
    the binder is made of polyvinylidene fluoride, and
    the positive electrode current collector has a softening temperature lower than a crystalline melting point of the binder.

2.  The nonaqueous electrolyte secondary battery of claim 1, wherein the tensile extension percentage of the positive electrode is calculated from a length of a sample positive electrode formed by using the positive electrode and having a width of 15 mm and a length of 20 mm immediately before the sample positive electrode is broken with one end of the sample positive electrode fixed and the other end of the sample positive electrode extended along a longitudinal direction thereof at a speed of 20 mm/min, and from a length of the sample positive electrode before the sample positive electrode is extended.

3.  The nonaqueous electrolyte secondary battery of claim 1, wherein the positive electrode current collector is made of aluminium containing iron.

4.  The nonaqueous electrolyte secondary battery of claim 3, wherein an amount of iron contained in the positive electrode current collector is 1.40 weight percent (wt. %) or more.

5.  The nonaqueous electrolyte secondary battery of claim 1, wherein the positive electrode current collector has a dynamic hardness of 70 or less.

6.  The nonaqueous electrolyte secondary battery of claim 1, wherein measurement of stress on a sample positive electrode whose circumferential surface is being pressed at 10 mm/min shows that no inflection point of stress arises until a gap corresponding to the sample positive electrode crushed by the pressing reaches 3 mm, inclusive, and the sample positive electrode is formed by using the positive electrode, has a circumference of 100 mm, and is rolled up in the shape of a single complete circle.

7.  The nonaqueous electrolyte secondary battery of claim 1, wherein
    the negative electrode has a tensile extension percentage of 3.0% or more, and
    the porous insulating layer has a tensile extension percentage of 3.0% or more.

8.  A method for fabricating a nonaqueous electrolyte secondary battery including a positive electrode including a positive electrode current collector and a positive electrode material mixture layer containing a positive electrode active material and a binder and provided on the positive electrode current collector, a negative electrode, a porous insulating layer interposed between the positive electrode and the negative electrode, and a nonaqueous electrolyte, the method comprising the steps of:

    (a) preparing the positive electrode;
    (b) preparing the negative electrode; and
    (c) either winding or stacking the positive electrode and the negative electrode with the porous insulating layer interposed therebetween after steps (a) and (b), wherein
    step (a) includes the steps of
    (a1) coating the positive electrode current collector with positive electrode material mixture slurry containing the positive electrode active material and the binder, and drying the slurry,
    (a2) rolling the positive electrode current collector coated with the dried positive electrode material mixture slurry, thereby forming the positive electrode having a predetermined thickness, and

(a3) performing heat treatment on the positive electrode coated with the dried positive electrode material mixture slurry at a predetermined temperature after step (a2),

the binder is made of polyvinylidene fluoride, and

the predetermined temperature is higher than or equal to a softening temperature of the positive electrode current collector and lower than a crystalline melting point of the binder.

9. A method for fabricating a nonaqueous electrolyte secondary battery including a positive electrode including a positive electrode current collector and a positive electrode material mixture layer containing a positive electrode active material and a binder and provided on the positive electrode current collector, a negative electrode, a porous insulating layer interposed between the positive electrode and the negative electrode, and a nonaqueous electrolyte, the method comprising the steps of:

(a) preparing the positive electrode;

(b) preparing the negative electrode; and

(c) either winding or stacking the positive electrode and the negative electrode with the porous insulating layer interposed therebetween after steps (a) and (b), wherein step (a) includes the steps of

(a1) coating the positive electrode current collector with positive electrode material mixture slurry containing the positive electrode active material and the binder, and drying the slurry,

(a2) rolling the positive electrode current collector coated with the dried positive electrode material mixture slurry, thereby forming the positive electrode having a predetermined thickness, and

(a3) performing heat treatment on the positive electrode coated with the dried positive electrode material mixture slurry at a predetermined temperature after step (a2),

the binder is made of polyvinylidene fluoride, and

the predetermined temperature is higher than or equal to a crystalline melting point of the binder and lower than a decomposition temperature of the binder.

10. The method of claim 8 or 9, wherein the positive electrode current collector is made of aluminium containing iron.

11. The method of claim 10, wherein an amount of iron contained in the positive electrode current collector is 1.40 weight percent (wt. %) or more.

12. The method of claim 8 or 9, wherein in step (a3), the heat treatment is performed on the positive electrode by bringing the positive electrode and a heated roll into contact with each other.

## FIG. 1

SOFTENING
TEMPERATURE
OF CURRENT
COLLECTOR
MADE OF Fe-
CONTAINING Al

TEMPERATURE
RANGE 2

MELTING POINT
OF BINDER

TEMPERATURE
RANGE 1

SOFTENING
TEMPERATURE
OF CURRENT
COLLECTOR
MADE OF Al

DECOMPOSITION
TEMPERATURE
OF BINDER

EP 2 330 662 A1

# FIG. 2

# FIG. 3

# FIG. 4

(a)

20mm/min

10a

9

10b

11

(b)

13

12 { 12A
     12B

(c)

15

14 { 14A
     14B

# FIG. 5

(a)

10mm/min

17a

16

18

17b

16a

(b)

19b

19a

INTENSITY OF STRESS

3mm    0mm    GAP

MOVEMENT OF
UPPER FLAT PLATE

# FIG. 6

(a)

(b)

## INTERNATIONAL SEARCH REPORT

| | International application No. |
|---|---|
| | PCT/JP2009/003309 |

**A. CLASSIFICATION OF SUBJECT MATTER**
*H01M4/02*(2006.01)i, *H01M2/16*(2006.01)i, *H01M4/04*(2006.01)i, *H01M4/62*
(2006.01)i, *H01M4/66*(2006.01)i, *H01M10/40*(2006.01)i

According to International Patent Classification (IPC) or to both national classification and IPC

**B. FIELDS SEARCHED**

Minimum documentation searched (classification system followed by classification symbols)
H01M4/02, H01M2/16, H01M4/04, H01M4/62, H01M4/66, H01M10/40

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)
JSTPlus(JDreamII)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2006-134762 A (Sony Corp.),<br>25 May, 2006 (25.05.06),<br>Claims 1 to 2; Par. Nos. [0011] to [0071]<br>(Family: none) | 1-7<br>8-12 |
| A | JP 2007-299724 A (Sony Corp.),<br>15 November, 2007 (15.11.07),<br>Claim 1; Par. Nos. [0004] to [0122]<br>(Family: none) | 1-12 |
| A | JP 2005-222936 A (Showa Denko Kabushiki Kaisha),<br>18 August, 2005 (18.08.05),<br>Par. No. [0029]<br>& WO 2005/066389 A1 | 1-12 |

| ☐ Further documents are listed in the continuation of Box C. | ☐ See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14 August, 2009 (14.08.09) | 25 August, 2009 (25.08.09) |

| Name and mailing address of the ISA/<br>Japanese Patent Office | Authorized officer |
|---|---|
| Facsimile No. | Telephone No. |

Form PCT/ISA/210 (second sheet) (April 2007)

**EP 2 330 662 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05182692 B